# EUROPEAN PATENT APPLICATION

(11) **EP 1 624 706 A1**
(43) Date of publication of application: **08.02.2006**
(21) Application number: 03720593.7
(22) Date of filing: 30.04.2003
(51) Int. Cl.: H04Q 7/22

(54) **MULTI-CLIENT/MULTI-CONVERSATION SYSTEM FOR CARRYING OUT FINANCIAL TRANSACTIONS AND/OR ACCESSING INFORMATION BY MEANS OF SMS MESSAGES**

(71) Applicant: Bankinter S.A., 28046 Madrid (ES)
(72) Inventor: UGUINA CARRION, Luis, E-28046 Madrid (ES)
(74) Representative: Lorente Berges, Ana
(86) International application number: PCT/ES2003/000192
(87) International publication number: WO 2004/098215

(57) **Abstract**

A system is described by means of which it proves possible to set up conversations between an institution, for example a financial institution, such as a bank or similar, and an end client, where the conversations may be initiated both by the institution and by the client, using the transmission of SMS short messages for this purpose. The system includes a set of components, amongst which we may single out an institution HOST, a first server with an associated first database, a second server and an associated second database, and a third server implemented as a communications port through which the different communications operators are accessed for the establishment of conversations with end clients. The system also envisages the use of personal access passwords for every application or group of applications.

## Description

### Object of the Invention

The present invention refers to a multiclient/multiconversation system for carrying out financial transactions and/or accessing information by means of SMS messages, which offers fundamental innovative features and considerable advantages over the known means used for the same purposes in the current state of the art.

More specifically, the invention proposes the development of a system for carrying out operations by means of using SMS short messages, with a wide range of capabilities implemented which assure operations between, for instance, a financial institution and a specific client or user, in a straightforward and convenient fashion and with a high degree of security. The system is set up in accordance with two operating modes, so that the conversation may be initiated both by the client and by the institution by means of sending a message and, in the latter case, by accepting two alternatives corresponding to the start of conversations on the initiative of the institution, or else they are activated when a given event takes place. The system also envisages the provision of confidential information with the use of some kind of security code that identifies the user.

The field of application of the invention lies in the telecommunications sector in general, and in particular, in the interaction between an institution (a bank, for instance) and the clients of the institution.

### Background and summary of the invention

The growing operating capabilities offered by certain institutions for attending clients without their having to visit the bank in person, or at least not having to do so during normal working hours, are generally speaking common knowledge to everyone. In the specific case of the banks, they are probably the business sector that has achieved the highest level of communication in this respect, beginning with the automatic telling machines through which it is possible to operate at any time of the day, and continuing with the client's access to the different banking services without having to do any actual travelling on account of the implementation of the Internet or some other similar type of communications network. In addition, at the present time the operating field is being extended thanks to the use of the mobile telephone and, in particular, to the sending of SMS short messages for setting up connections between two distant points.

The present invention belongs precisely to the sector mentioned above and proposes the implementation of a system by means of which financial transactions may be carried out between an institution, a bank for instance, and a client, a system whose main features may be summarized as follows:
- Holding a number of simultaneous conversations with the same client;
- Holding conversations with a number of clients at the same time;
- Option of the conversation being initiated either by the system administrator or by the end user;
- Inclusion of adequate security means depending on the use that it is wished to make of the system;
- Connection with a number of telephone operators;
- Possibility of starting conversations when certain events arise;
- Possibility of direct application to any economic sector, and
- Capability of conducting financial transactions, restricted access to information, or simple public enquiry.
- Connection by way of different protocols.

In the present state of the art some documents are known that describe systems intended for applications similar to that proposed by the invention. In this respect, special mention may be made of the document Patent PCT n°. F-198/00250, relating to a method of use of banking services via a mobile digital radio, with the use of SMS messages, aimed at a short messages services centre, and routed to a user interface server, the data being transferred from the latter to the bank self-service unit. Although this method represents a considerable step-forward in the field of application for which it is intended, it has the drawback that it only permits a very basic conversation and it does not permit sessions opened initially with the user to be resumed at the exact moment when they were halted.

### Short Description of the Drawings

These and other features and advantages of the invention will be explained more clearly on the basis of the detailed description below of a preferred embodiment, submitted solely for informative and non-restrictive purposes, in reference to the adjoining drawings, where:

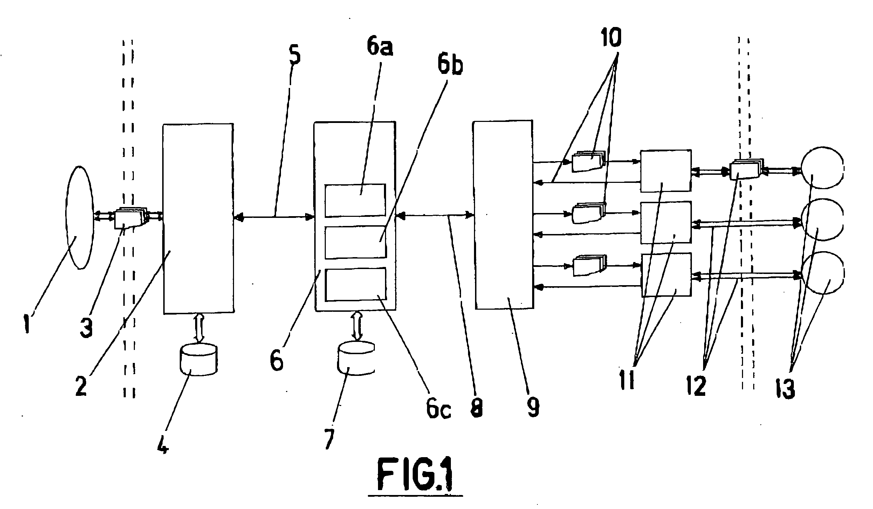

Figure 1 shows a diagrammatic representation of a preferred implementation of the system of the invention.

### Description of a Form of Preferred Embodiment

As stated above, the detailed description of the form of preferred embodiment of the invention is going to be carried out hereinunder with the aid of the adjoining drawings, whose sole Figure shows a diagrammatic graphic representation of the system of the invention, and whose components have been assigned corresponding numerical references. Thus, first of all we observe the HOST 1 device (mainframe) associated with the institution in question, for example a financial institution such as a Bank or the like, linked to a first server 2, by way of protocols 3, whilst there is also a first database 4 in connection with this server 2; similarly, this server 2 is connected to a second server 6 by way of protocols 5, there also being a second database 7 associated with this other server 6; then, there appears a third server 9 linked to the previous one by means of protocols shown graphically with the reference 8, the latter acting as a communications port for the purpose of controlling the number of messages per time space, as will be explained later. Between the communications port 11 and the different operators 11, communication takes place through protocols identified with the numerical reference 10, with the result that every communications operator 11 carries out the conversion of the proprietary protocol into his respective protocols 12 for the transmission 13 of the corresponding message to the end user.

As may be observed, the basic structure of the circuit presents a set of physical devices associated with the financial institution, capable of establishing relations, by means of appropriate protocols, with the different communications operators that may exist at any time, and through which the respective message is transmitted.

The working of the system of the invention will be described below.

As pointed out at the start of the description, the conversation may be initiated by the client or by the institution by means of sending a message. Normally, though not necessarily, the longer process will be the one initiated by the institution.

The conversations initiated by the institution may in turn be carried out in accordance with two different situations, namely i) upon the initiative of the institution itself, or ii) by a certain event happening. Thus, in the former case, the institution may inform the client of a given decision or operation at the time it considers appropriate, whereas in the latter case, if the institution is a Bank, for instance, the communication may be initiated when the client has performed a given operation that may require the intervention of the institution, for example a purchase made with a credit card and which requires financing by the institution.

In both cases, the institution HOST 1 device sets up communication by means of protocols 3 with a first server 2, which undertakes to initiate the session by storing the conversation status and the parameters needed for its correct flow, for example, in a database 4. The server 2 sets up connection with a second server 6 by way of protocols 5 in order to control the life cycle of the messages. As may be observed in the graphic representation in Figure 1, this second server 6 contains three main processes which have been identified with the reference numbers 6a, 6b, 6c. An initial subprocess 6a is intended to monitor the message control data (for example, the data and time of message transmission, whether confirmation is required or not, ... etc.) , in order to make the pertinent decision on the basis of such data. Thus, if a message sent from the first server 2 with an expiry date prior to the system date is received at 6a, this message is sent back to the aforesaid first server 2. Provision is also made for other factors to be monitored at 6a, such as, for example, the existence of a mobile device to be addressed, or any other item that may be necessary in order to access the end client.

For its part, the subprocess 6b is responsible, for example, for controlling the life cycle of the messages, monitoring such actions as whether the transmission time has expired and/or delivery has taken place to the end mobile device, which may have been set arbitrarily or dynamically. In this way, for instance, if there is no confirmation of reception or expiration of the message by the operator, subprocess 6b destroys the message and sends confirmation of all this to the first server 2.

Lastly, the third subprocess 6c contained in the second server 6 consists of a subprocess that is executed periodically and which is responsible for collecting the messages planned in a database table 7, and for sending them to the relevant operator 11. For example, if a given financial operation, such as a loan or any other transaction, is generated during the night (for example, a pre-authorized loan which is generated at 3:00 a.m.), this action may be communicated first thing in the morning (for example, at 8:00 a.m.), or at any other time previously scheduled by the system. The above-mentioned third subprocess 6c controls the existence of messages which, at the discretion of the institution in question, may intentionally block the issue of new messages. The function of this utility is to control, for example, excessive transmission of messages to a device, blocking the output of new incoming messages from the first server 2, until such time as the output towards this device is cleared by virtue of some pre-defincd event occurring.

The set of the three processes associated with the second server 6 and described above thereby permits that, for example, when a request to transmit a message arrives from the first server 2, a check is made not only on the time of deferred transmission for either its immediate or deferred execution, but also on the device number to which it has to be addressed and its validity, and that transmission is carried out.

Once the foregoing processes 6a, 6b, 6c have been performed at the second server 6, this sets up a communication with a third server 9, implemented as a communications port, with the use of the protocols referenced with 8, in order to control the number of messages per unit of time transmitted to each of the communications operators 11 so as to assure the message flow without exceeding the limits contracted with each one of these operators 11.

By means of certain protocols 10, the gateways (or communication accesses) for direct communication with the operators 11 convert the proprietary protocol described hitherto into the protocols pertaining to each one of the communications operators.

After being transmitted, the message enters the systems that the operators have set up to forward it to the end user, while the operators may also confirm correct reception at the client's device. The above-mentioned second server 6 is the one responsible for storing this item for controlling the conversation and for sending it, in turn, to the first server 2, where it may be used for controlling the conversation and at the same time sending it, for instance, to the HOST 1 device for its subsequent registration.

The end user (i.e. the institution client) receives a message in which he is told how to perform the proposed operation. In other words, the client is informed of the conditions of the financial operation, naturally with the limitations currently prevailing for the length of SMS messages so that he may answer, if need be, the option chosen, as the case may be, from amongst the different ones that may be offered to him in relation to this financial operation. In a specific case of application, a pre-authorized loan situation may be supposed in respect of which the client is offered three terms. The response format will be indicated in the actual message and will consist, for example, of a command recognized by the system (for example, PTM), a reference will vary in accordance with the operation (for example, 1 to indicate a year, or by a session number too, if the client holds several at the same time), as well as another/other reference(s) that may be necessary for the financial operation. The SMS message may be cent by the client to a number which will be indicated in the message initiated by the institution, or in the cases when possible, it will be sufficient just to answer the message received by the client.

Once the client has responded, there is a possibility that the answer may be incorrect (for instance, if a variable is missing or the variable is not amongst those accepted), in which case, if the process described below is carried out, he will receive a fresh message where he will be told how to correct the error.

In any case, irrespective of whether the answer is correct or not, the message "is transmitted" by the SMS platforms of each of the operators 11 and enters the "gateways" designed tor each operator. These "gateways" convert each operator's protocol into the protocol known by the system (for example, HTTP/XML).

Servers 9 and 6 are transparent at this point of the process, except for channelling the message to the first server 2.

This above-mentioned first server 2 uses the end device telephone number to check whether there is a conversation initiated by it, and if the message received matches up with any of the expected responses. If the message does not match up with any of the expected ones, an error message is sent back with a content that will vary according to the error which may have been detected and which will be transmitted via the same flow described previously.

If it does match up, said server 2 activates the respective conversation, executes the associated processes and starts transmission, if need be, of a new message, which will follow the same flow as described. The transmission process composes the message according to the data received in the end user's answer, resorting to the systems, HOST for instance, that may be necessary to gather the information that has to be contained in the message, updating all the data in the above-described processes.

The end device receives an SMS message and sends back its agreement with the instructions received, following the flow of the conversation described above. This flow has no limitation as to the number of input/output messages and they may be extended to infinity.

This first server 2 will monitor the end of the conversation, which will take place according to the logical flow defined beforehand for every conversation and which is monitored by this server.

Whenever necessary, one of the outgoing SMS messages may ask the end user to insert into one of his messages the variable pertaining to a security code (SC) which is known by both parties and permits full identification of the person interacting with the end device. Thus, for instance, it is possible to ask for a code to be entered that is contained on a physical card placed at the end user's disposal previously, or any other method that will permit the client's full identification and is at the same time sturdy enough to accure the occurity that may be required in each case. When this variable is correct and matches up with what the session control is expecting, the operation (a financial transaction for example) is executed for instance on the institution HOST 1 device.

In this case, and whenever necessary, the first server 2 controls the response, for example of HOST 1 device, and transmits a confirmation message to the user, in accordance with the procedures described above, and putting an end to the conversation if so defined in the flow of each specific process.

It may also be the client who initiates the conversation, as stated at the start of the description of how the system of the invention works. The flows are, in general, as those described hitherto, but with a few modifications both with regard to the way in which the subprocesses of servers 6, 2 perform their task and with regard to access, for instance, to the HOST 1 device.

There are also some special considerations as regards, for instance, situations in which the end device asks for some information that it has, of a confidential or restricted nature for instance (as may be the case, for example, of a request for the balance of a bank current account). In the case when necessary, the format of the SMS that the client initiates should contain, either in the first or in one of the messages that issue from his device, a security code or PIN (Personal Identification Number), which provides him with access to information of this type. This PIN will be defined for every specific application or it may be common to a group of applications, in accordance with the service we want to provide and the level of security we want to obtain for such identification.

As an additional feature, both the PIN and the security code (SC) mentioned above may also be controlled by subsystems separate from the one that has just been described, depending on the level of security that may be required.

In addition and unlike other systems of the prior art where standard references are used in which the user has to "fill out" the fields, but the possibility of dialogue is very limited, in the system of the invention, although it also follows a standard system (command + references), the only standard that the client has to know is when he has to initiate the conversation/session. Whenever a message is transmitted, the client is told the standard that he has to use to continue the conversation/session, while the system has also foreseen the alternative possibility of endowing the commands with a certain degree of "intelligence", so that, for instance, in the case of a financial institution of the bank type, if "LOAN" is written instead of "PTM", the system is capable of recognizing it.

As will be appreciated, the foregoing description has been made with a view to a specific application for the establishment of conversations between an institution cited specifically as a bank and an end client. This form of description has been chosen, however, solely for the purpose of illustrating the invention and make it as readily comprehensible as possible, so it should never be taken as restrictive, quite to the contrary, as the invention may be applied to many other sectors of the art in which an interaction is required between a given institution of any kind and an end client.

It should also be made clear that the protocols used for setting up communication between the different components of the system will be any ones capable of adapting to the characteristics of the system designed, although HTTP/XML, MQ Series type protocols or similar are preferred.

Lastly, the description of the system given above refers to its most simple form of implementation. It should nevertheless be borne in mind that the system design enables multiple simultaneous conversations to be set up with multiple clients, without any need for the components forming it to be modified.

It is not considered necessary to make the contents of this description more extensive for an expert on the subject to be able not only to understand its scope and the advantages stemming from the invention, but also to develop and put the object thereof into practice.

However, it should be understood that the invention has been described according to a preferred embodiment thereof, so it may be susceptible to modification, providing that this does not involve any alterations in the essentials of this invention.

## Claims

1. A multiclient/multiconversation system for carrying out financial transactions and/or accessing information by means of SMS messages, by means of which controlled conversations may be set up between an institution, for example a financial institution, and an end user, through the use of short messages, for the proposal, control and approval of a financial operation between the institution and the client, which is **characterised in that** the system comprises:
a device HOST (1) associated with the financial institution;
a first server (2), connected to said HOST device, which undertakes to initiate the session and with which a first database (4) is associated for storing the status of the conversation and the parameters needed for its correct flow;
a second server (6), connected to the first server (2), in which the life cycle of the messages is controlled and which includes a second database (7); and
a third server (9), implemented as a communications port, connected to the second server (6), in which the number of messages per unit of time is monitored and from which transmission takes place to each of the communications operators (11), assuring the flow of messages without exceeding the limits contracted with each communications operator (11),
and **in that** communication is set up between the components of the system by using appropriate protocols, preferably HTTF/XML, MQ series type protocols or others of a similar nature.

2. A system according to claim 1, which is **characterised in that** the second server (6) includes three data control subprocesses (6a, 6b, 6c), of which a first subprocess (6a) is responsible for monitoring the message control data, such as the date and time of transmission, need for confirmation or not, etc., and even the return of the message if the expiry date is prior to the system date; a second subprocess (6b) which is responsible for controlling the life cycle of the messages, including destruction of the message if there is no confirmation of message reception or expiration on the part of the communications operator (11); and a third subprocess (6c), which is executed periodically and which is responsible for collecting the messages planned in an associated database table (7) and for sending them to the respective communications operator.

3. A system according to claims 1 or 2, which is **characterised in that** it is designed to permit the initiation of conversations both on the part of the institution and on the part of the end client.

4. A system according to one or more of claims 1 to 3, which is **characterised in that** it also comprises the capacity to provide the end client with information of a confidential or restricted nature by use of a code or PIN defined for every specific application or group of applications and which could, if appropriate, by controlled by separate subsystems depending on the level of security required.
